# EUROPÄISCHE PATENTSCHRIFT

(11) **EP 1 300 454 B1**
(45) Veröffentlichungstag und Bekanntmachung des Hinweises auf die Patenterteilung: **03.12.2008**
(21) Anmeldenummer: 02020374.1
(22) Anmeldetag: 12.09.2002
(51) Int. Cl.: C09J 133/06, C09J 7/02, C08F 8/00

(54) **Verfahren zur Herstellung UV-vernetzter Acrylathaftklebemassen**
Process for the preparation of UV-crosslinked acrylic adhesives
Procédé de préparation d'adhésifs acryliques réticulés com UV

(30) Priorität: 05.10.2001 DE 10149077
(43) Veröffentlichungstag der Anmeldung: 09.04.2003
(73) Patentinhaber: tesa AG, 20253 Hamburg (DE)
(72) Erfinder: Husemann, Marc, 22605 Hamburg (DE); Zöllner, Stephan, 21244 Buchholz/Nordheide (DE)
(74) Vertreter: Stubbe, Andreas

(56) Entgegenhaltungen:
- EP-A- 0 893 456
- EP-A- 1 067 144
- DE-A- 2 743 979
- DE-A- 4 433 290
- DE-A- 10 053 563
- DE-A- 19 653 631
- US-A- 5 391 406

## Beschreibung

Die Erfindung betrifft ein Verfahren zur Herstellung von UV-vernetzbaren Acrylathaftklebemassen sowie die Verwendung derartiger Acrylathaftklebemassen.

Schmelzhaftkleber sind Verbindungen, die die Eigenschaften von Schmelzklebern mit den Eigenschaften von Haftklebemassen vereinigen. Schmelzhaftkleber schmelzen bei erhöhten Temperaturen und formen bei Abkühlung eine permanent klebrige Schicht, die bei Kontakt mit einem Substrat adhäsiv auffließt. In Kombination mit unterschiedlichen Substraten, wie z.B. Papier, Gewebe, Metall und Kunststofffilme, können eine Vielzahl unterschiedlicher Produkte, insbesondere Haftklebebänder sowie Etiketten, hergestellt werden. Diese Haftklebeprodukte haben einen weiten Anwendungsbereich in der Automobilindustrie, z.B. zur Befestigung oder zur Abdichtung, oder in der pharmazeutischen Industrie, z.B. für Wirkstoffpflaster.

Die typische Beschichtungstemperatur für Schmelzhaftkleber liegt zwischen 80 und 180 °C. Um möglichst niedrige Beschichtungs- sowie Verarbeitungstemperaturen zu erreichen, sollte das Molekulargewicht des zu beschichtenden Schmelzhaftklebers möglichst niedrig sein. Andererseits muß die Haftklebemasse auch eine gewisse Kohäsion aufweisen, damit bei Anwendung nicht das Haftklebeband vom Substrat abrutscht. Zur Erhöhung der Kohäsion ist daher ein hohes Molekulargewicht essentiell.

Prinzipiell läßt sich die Kohäsion von Acrylathaftklebemassen durch eine effiziente Vernetzung steigern. In der US 5,536,759 wurden Hydroxy- oder Carbonsäuregruppen enthaltenden Polyacrylaten mit 1-(1-isocyanato-1-methyl ethyl)-3-(1-methyl ethenyl) benzol (m-TMI) umgesetzt. Durch die Funktionalisierung mit den Doppelbindungen lassen sich die beschriebenen Polyacrylate sehr effizient mit UV-Licht vernetzen und somit Haftklebemassen mit einer hohen Kohäsion erzeugen. Nachteil dieses Verfahrens ist die hohe Toxizität der eingesetzten Isocyanate sowie das aufwendige zweistufige Verfahren, da erst in einem ersten Schritt die Polymerisation durchgeführt wird und in einem zweiten Schritt die polymeranaloge Reaktion in einem Reaktor durchgeführt werden muß. Zudem sind Doppelbindungs-funktionalisierte Polyacrylate nicht sehr thermisch stabil und scherempfindlich. Letztendlich eignen sich diese Polymere nicht für den Hotmeltprozeß, da die UV-Photoinitiatoren nicht am Polymer gebunden sind und somit sich bei den für den Hotmelt-Prozess üblichen hohen Temperaturen verflüchtigen können.

In der US 5,741,543 werden mit Doppelbindungen funktionalisierte Polyacrylate UV-vernetzt, die über eine Polymeranaloge Reaktion hergestellt wurden. Die Polymere wurden über die UV-Präpolymerisationstechnik hergestellt und weisen somit die bekannten Nachteile wie langsame Prozessgeschwindigkeiten und der freie Umgang von Monomeren auf.

Der Nachteil der flüchtigen Photoinitiatoren kann umgangen werden durch die Copolymerisation von z.B. acrylierten Benzophenon-Derivaten als UV-Photoinitiatoren (US 5,264,533). In der US 5,294,688 wurden diese copolymerisierbaren UV-Photoinitiatoren auch für Acrylathaftklebemassen beschrieben. In der US 4,144,1157 wurden copolymerisierbare Benzoin-UV-Photoinitatoren für Acrylathaftklebemassen beschrieben. Alle Methoden weisen aber den Nachteil auf, daß die eingesetzen UV-Photoinitiatoren erst in einem separaten Schritt aufwendig synthetisiert werden müssen und nicht kommerziell erhältlich sind. Zudem ist die Copolymerisation von UV-Photoinitiatoren mit Problemen behaftet, da Acrylathaftklebemassen zumeist durch freie radikalische Polymerisationen hergestellt werden und intermediäre Radikale mit dem Photoinitiator wechselwirken können. Als Resultat treten Vergelungen auf, die nur durch hohe Regleranteile kompensiert werden können, was wiederum das mittlere Molekulargewicht reduziert. Zudem bildet sich nach der UV-Bestrahlung der unter anderem in der DE 27 43 979 A1 beschriebenen Systeme Benzaldehyd, welches als störender Geruch wahrgenommen werden kann.

In den US 4,565,769 und US 4,454,218 werden Photosensiblisatoren für Photopolymerisationen in der Photoresisttechnik beschrieben. Diese Photosensibilisatoren werden in einer polymeranalogen Reaktion mit dem Polymer umgesetzt. Die beschriebenen Polymere werden aber nicht für Acrylathaftklebemassen eingesetzt. Vielmehr werden die Photosensibilisatoren zur Polymerisation und nicht zur UV-Vernetzung eingesetzt. Weitere Nachteile sind, daß ungebundene UV-Photoinitiatoren zusätzlich hinzugefügt werden und kein kontinuierliches Verfahren möglich ist.

Abgeleitet aus dem oben beschrieben Stand der Technik besteht daher der Bedarf für ein Verfahren zur Herstellung von UV-vernetzbaren Acrylatschmelzhaftklebern, die leicht aufkonzentriert und im Hotmelt-Prozess verarbeitet werden können, das Polymer zur UV-Vernetzung mit UV-Photoinitiatoren funktionalisiert wird und nach der Beschichtung als Acrylatschmelzhaftkleber auf dem Träger vernetzt wird.

Die Aufgabe wird für den Fachmann überraschend durch das im Hauptanspruch dargestellte erfindungsgemäße Verfahren gelöst. Weitere Ansprüche betreffen vorteilhafte Weiterentwicklungen des Verfahrens.

Demgemäß betrifft die Erfindung ein Verfahren zur Herstellung von UV-vernetzbaren Acrylathaftklebemassen, wobei in einem Hotmelt-Prozess Polyacrylate in Schmelze mit UV-photoaktiven Substanzen umgesetzt werden, wobei die UV-photoaktiven Substanzen derart sind, daß sie Strahlungsenergie aufnehmen und auf ein Reaktionssystem übertragen können.

In einer besonders bevorzugten Weiterentwicklung des erfinderischen Verfahrens werden Polyacrylate mit folgender Zusammensetzung oder Polyacrylate, welche durch Polymerisation einer Monomermischung der enthaltend folgende Komponenten hergestellt werden können, eingesetzt:
(a) 45 bis 99,5 Gew.-% Acrylsäure- und/oder Methacrylsäure-Derivate mit der folgenden Formel

   CH₂=C(R₁)(COOR₂)

   wobei R₁ = H oder CH₃ ist und R₂ eine Alkylkette mit 1 bis 20 C-Atomen ist,
(b) 0,5 bis 25 Gew.-% Vinylverbindungen mit funktionellen Gruppen Y, wobei die funktionellen Gruppen derart gewählt sind, daß sie in der Lage sind, chemische Kopplungsreaktionen mit den UV-photoaktiven Substanzen oder Teilen hiervon einzugehen einzugehen, insbesondere mit der im folgenden näher definierten Gruppe X der UV-photoaktiven Substanzen.

Eine weitere günstige Variante des Verfahrens geht von einer Monomermischung aus, der als weitere Komponente
(c) bis zu 30 Gew.-% olefinisch ungesättigte Monomere, insbesondere mit funktionellen Gruppen,
zugegeben sind.

In einer sehr vorteilhaften Ausführungsform der Haftklebemasse werden als Komponente (a) eine oder mehrere Verbindungen, welche sich durch die folgende allgemeinen Formel 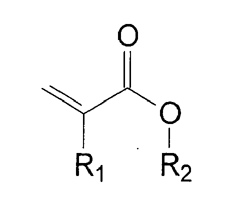 beschreiben lassen, eingesetzt.
Dabei ist R₁ = H oder CH₃ ist, der Rest R₂ wird gewählt aus der Gruppe der verzweigten oder unverzweigten, gesättigten Alkylgruppen mit 4 bis 14 Kohlenstoffatomen.
Acrylmomonere, die bevorzugt für die erfinderische Haftklebemasse als Komponente (a) eingesetzt werden, umfassen Acryl- und Methacrylsäureester mit Alkylgruppen bestehend aus 4 bis 14 C-Atomen, bevorzugt 4 bis 9 C-Atomen. Spezifische Beispiele, ohne sich durch diese Aufzählung unnötig einschränken zu wollen,. sind n-Butylacrylat, n-Pentylacrylat, n-Hexylacrylat, n-Heptylacrylat, n-Octylacrylat, n-Nonylacrylat und deren verzweigten Isomere, wie z. B. 2-Ethylhexylacrylat.

Als Vinylverbindungen mit funktionellen Gruppen im Sinne der Komponente (b), die insbesondere zu einer Reaktion mit UV-Photoinitiatoren des Typs (I) befähigt sind, sind z.B. geeignet ein oder mehrere Carbonsäureanhydride, wie z.B. Maleinsäureanhydrid oder Itaconsäureanhydrid, oder acrylierte oder methacrylierte Carbonsäureanhydride, wie z.B. 4-Methacryloxyethyl Trimellitatanhydrid, oder Hydroxy-funktionalisiete Monomere, wie z.B. Hydroxyethylacrylat oder Hydroxeethylmethacrylat, oder Carbonsäure-funktionalisierte Monomere, wie z.B. Acrylatsäure und Methacrylsäure, oder Amin-funktionalisierte Monomere, wie z.B. Dimethylformamid, oder Isocyanat-funktionalisierte Monomere, wie z.B.

MOI, oder epoxidierte Monomere, wie z.B. Glyceridylmethacrylat, oder generell alle Monomere mit einer funktionellen Gruppe die mit UV-Photoinitiatoren und/oder Photosensibilisatoren eine chemische Kopplung eingehen können.

Als Monomere (b) können Verbindungen der folgenden allgemeinen Formel eingesetzt, 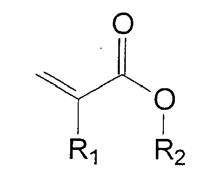 wobei R₁ = H oder CH₃ ist und der Rest -OR₂ eine funktionelle Gruppe darstellt oder beinhaltet. Besonders bevorzugte Beispiele für die Komponente C sind z.B. Hydroxyethylacrylat, Hydroxypropylacrylat, Hydroxyethylmethacrylat, Hydroxypropylmethacrylat, Acrylsäure, Methacrylsäure, Allylalkohol, Itaconsäure und Glyceridylmethacrylat, wobei diese Aufzählung nicht abschließend ist und keinen Anspruch auf Vollständigkeit besitzt.

Im Sinne der Komponente (c) lassen sich hervorragend Vinylverbindungen, wie z.B. Vinylacetat, Acrylamide, Styrol, Vinylchlorid, Benzylacrylat einsetzen.

Weiterhin werden optional als Komponente (c) Vinylmonomere aus den folgenden Gruppen eingesetzt:
Vinylester, Vinylether, Vinylhalogenide, Vinylidenhalogenide, Vinylverbindungen mit aromatischen Cyclen und Heterocyclen in α-Stellung.
Auch hier seien nicht ausschließlich einige Beispiele genannt: Vinylacetat, Vinylformamid, Vinylpyridin, Ethylvinylether, Vinylchlorid, Vinylidenchlorid, Acrylonitril.
Weiterhin werden als Monomere für die Komponente (c) in bevorzugter Weise Styrol oder allgemein monomere Arylverbindugnen eingesetzt, die auch Heterocyclen oder Heteroatome enthalten können.

Als UV-photoaktive Substanzen lassen sich dabei in hervorragender Weise Photoinitiatoren und/oder Photosensibilisatoren einsetzen. Erstere sind in der Lage, bei Bestrahlung mit Licht geeigneter Wellenlänge in Radikale (oder Ionen) zu zerfallen und derart Polymerisationsreaktionen oder Vernetzungsreaktionen zu initiieren. Letztere nehmen Strahlungsenergie auf und übertragen diese an ein Reaktionssystem, ohne dabei bleibende Veränderungen zu erfahren.

Insbesondere werden UV-photoaktive Substanzen eingesetzt, die eine funktionelle Gruppe X tragen, welche zu einer chemischen Kopplungsreaktion befähigt ist. Diese funktionelle Gruppe X kann bevorzugt durch eine der folgenden Gruppen repräsentiert werden oder eine der folgenden Gruppen bzw. Verbindungen beinhalten:
Hydroxygruppen (Alkohole), Thiole, Isocyanate, Carbonsäureanhydride, Amine, Amide, Aldehyde, Oxazoline und/oder Epoxide.

Generell lassen sich UV-Photoinitiatoren unterscheiden in Norrish Typ I und Typ II Photoinitiatoren, wobei einige Beispiele für beide Klassen sein können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, wobei diese Aufzählung keinen Anspruch auf Vollständigkeit besitzt.
Als Norrish-Typ-I-Photoinitiatoren werden solche Verbindungen bezeichnet, welche bei Bestrahlung mit Licht gemäß einer Norrish-Typ-I-Reaktion zerfallen. Dabei handelt es sich klassisch um eine Photofragmentierung einer Carbonyl-Verbindung, bei dem die Bindung zu einem in α-Stellung zur Carbonylgruppe befindlichen Kohlenstoffatom radikalisch aufgespalten wird (α-Spaltung), so daß ein Acyl- und ein Alkyl-Radikal entstehen.
Im erfinderischen Sinne werden zu den Norrish-Photoinitiatoren auch solche gezählt, bei denen statt der Carbonyl-Gruppe eine andere funktionelle Gruppe vorhanden ist und die Spaltung die Bindung zwischen dieser Gruppe und einem α-ständigen Kohlenstoffatom betrifft.
Norrish-Typ-II-Photoinitiatoren zerfallen bei Bestrahlung mit Licht gemäß einer Norrish-Typ-II-Reaktion unter Wasserstoff-Abstraktion, es handelt sich dabei um eine intramolekulare Reaktion.
Bei aliphatischen Ketonen kann dabei ein Wasserstoff aus der γ-Position zu einer entsprechend der oben dargestellten funktionellen Gruppe abgespalten werden.
Erfindungsgemäße Beispiele für Norrish-Photoinitiatoren beiden Typs sind Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, ohne sich durch diese Aufzählung unnötig zu beschränken. Zu den Typ-1-Initiatoren gehören insbesondere aromatische Carbonylverbindungen, wie Benzoinderivate, Benzilketale und Acetophenonderivate. Typ-II-Photoinitiatoren sind besonders aromatische Ketone, wie z.B. Benzophenon, Benzil oder Thioxanthone.
Für weitere Details siehe beispielsweise Römpp Lexikon Chemie - Version 2.0, Stuttgart/New York: Georg Thieme Verlag 1999.
Ferner existieren noch Photoinitiatoren auf Triazin-, Hexaarylbisimidazol und Farbstoff-Basis. Ein guter Überblick wird hier gegeben in Chemistry & Technology of UV & EB Formulation for Coatings, Inks & Paints, Vol 5, by Dowling, Pappas, Monroe, Carroy, Decker, ed. By P K T Oldring, Sita Technology, London, England.

Insbesondere günstig einzusetzen sind UV-Photoinitiatoren und/oder UV-Photosensibilisatoren, die eine funktionelle Gruppe X tragen, die zu einer chemischen Reaktion mit der funktionellen Gruppe Y der Comonomere entsprechend der Komponente (b) befähigt ist, etwa entsprechend der allgemeinen Formel 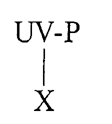 wobei UV-P die UV-photoaktive Substanz ist.

Die funktionelle Gruppe X kann folgende chemischen Verbindungen enthalten, ohne daß diese Aufzählung Anspruch auf Vollständigkeit besitzen würde: Hydroxygruppen (Alkohole), Thiole, Isocyanate, Carbonsäureanhydride, Amine, Amide, Aldehyde, Oxazoline und Epoxide.
UV-P kann UV-Photoinitiatoren und UV-Photosensibilisatoren umfassen, wobei eine Vielzahl möglicher Strukturen bereits genannt wurde. In einer bevorzugten Auslegung der Erfindung werden Amin und Hydroxy-funktionalisierte Photoinitiatoren und Photosensilibisatoren eingesetzt. In einer äußerst bevorzugten Auslegung werden die Verbindungen der folgenden Formel 1a [(a-Benzyl-α-(dimethylamino)-4-morpholinobutyrophenon], 1b [(3-[4-(Dimethylamino)phenyl]-1-[4-(2-hydroxyethoxy)phenyl]-2-propen-1-on)], 1c [Benzoin] und 1d [(1-(Hydroxycyclohexyl)-phenylketon)] eingesetzt.

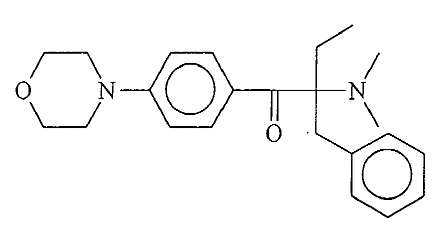

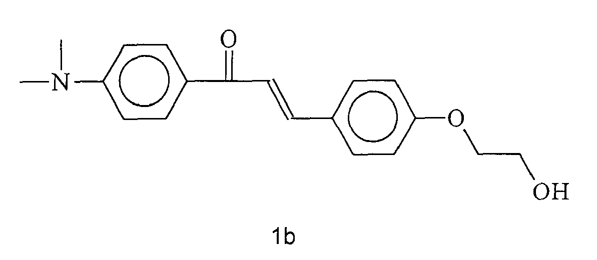

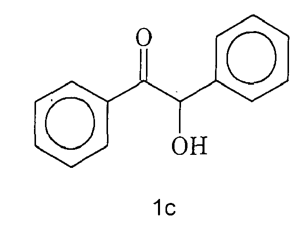

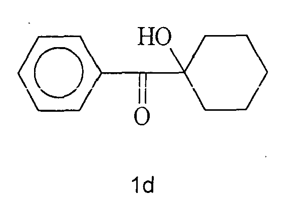

Für das erfindungsgemäße Verfahren werden die Monomere der Komponenten (a), (b) und gegebenenfalls (c) durch Polymerisation in haftklebrige Polyacrylate überführt. Zur Polymerisation werden die Monomere dermaßen gewählt, daß die resultierenden Polymere als industriell verwendbare Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft unterhalb 25 °C liegen.

Die Polymerisation kann in Gegenwart eines oder mehrerer organischer Lösungsmittel und/oder in Gegenwart von Wasser durchgeführt werden. In einer vorteilhaften Ausführungsform des Verfahrens liegen zusätzliche Colösungsmittel oder Tenside, wie Glycole oder Ammoniumsalze von Fettsäuren, vor.
Bevorzugte Verfahren verwenden möglichst wenig Lösungsmittel. Geeignete organische Lösungsmittel oder Gemische von Lösungsmitteln sind reine Alkane (Hexan, Heptan, Octan, Isooctan), aromatische Kohlenwasserstoffe (Benzol, Toluol, Xylol), Ester (Essigsäureethylester, Essigsäurepropyl-, butyl-, oder -hexylester), halogenierte Kohlenwasserstoffe (Chlorbenzol), Alkanole (Methanol, Ethanol, Ethylenglycol, Ethylenglycolmonomethylether) und Ether (Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die hergestellten Polymere weisen bevorzugt ein mittleres Molekulargewicht M_{w} (Gewichtsmittel) von 50.000 bis 1.200.000 g/mol, mehr bevorzugt zwischen 300.000 und 800.000 g/mol auf. Die Bestimmung des mittleren Molekulargewichtes M_{w} erfolgt über Größenausschlußchromatographie (Gelpermeationschromatographie, GPC) oder Matrixunterstützte Laser-Desorption/Ionisations-Massenspektrometrie (MALDI-MS).

Sehr bevorzugt wird die Acrylathaftklebemasse vom Lösemittel befreit. Hierfür werden die wie im vorhergehenden beschrieben hergestellten Polyacrylate zu einer Polyacrylatmasse aufkonzentriert, deren Lösungsmittelgehalt ≤ 2 Gew.-% ist. Dieser Prozeß findet bevorzugt in einem Aufkonzentrationsextruder statt. In einer bevorzugten Auslegung wird im Vent-Extruder aufkonzentriert oder zur Aufkonzentration ein Ein- oder Zweischneckenextruder eingesetzt, wobei der Zweischneckenextruder gleich- oder gegenläufig betrieben werden kann. In für das erfindungsgemäße Verfahren sehr vorteilhafter Weise liegt der Gehalt an Lösungsmittel in der Polyacrylatmasse nach dem Aufkonzentrationsprozeß bei unter 0,5 Gew.-%.
Nach der Aufkonzentration erfolgt im erfinderischen Verfahren die Zugabe der obenbeschriebenen funktionalisierten UV-Photoinitiatoren und/oder UV-Photosensibilisatoren. Diese Zugabe erfolgt bevorzugt in einem Compounder oder Kneter,
wobei als Compounder wiederum ein Zweischneckenextruder eingesetzt werden kann. Ferner eignen sich zum Compoundieren alle dem Fachmann bekannten Mischaggregate, wie z.B. auch ein Ringextruder.

Der molare Anteil der zur reaktiven Extrusion eingesetzten funktionalisierten UV-Photoinitiatoren und UV-Photosensibilisatoren ist gleich oder bedeutend geringer als die molare Menge der in der Polyacrylatkette einpolymerisierten funktionalisierten Monomere entsprechend der Komponente (b). In einer bevorzugten Vorgehensweise werden Katalysatoren zur Steigerung der Reaktivität hinzugegeben. Der Anteil der Katalysatoren beträgt zwischen 0,01 und 100 Mol-%, bevorzugt aber zwischen 0,1 und 5 Mol-% bezogen auf den molaren Anteil der funktionelle(n) Gruppe(n) der UV-Photoinitiatoren und UV-Photosensibilisatoren.
Weiterhin lassen sich auch Kupplungsreagenzien einsetzen, die die C-C-Bindungsbildung fördern. Hier können beispielsweise N,N'-Dicyclohexylcarbodiimid, Dicyclohexylharnstoff, N,N'-Carbonyldiimidazol und Diethylazodicarboxylat in Verbindung mit Triphenylphosphin verwendet werden, wobei diese Aufzählung keinen Anspruch auf Vollständigkeit besitzt. Weitere Kupplungsreagenzien sind in Advanced Organic Chemistry, Reactions, Mechnisms and Structure, 4. Ed., by Jerry March, 1992, John Wiley & Sons zitiert und aufgeführt.
Ferner verlaufen die polymeranalogen Reaktionen in einer bevorzugten Variante unter Säure- oder Basenkatalyse. Als Säuren lassen sich alle Lewis-aciden Verbindungen einsetzen. Bevorzugt läuft die Reaktion mit p-Toluolsäure oder Itakonsäure. Als Basen lassen sich alle Lewis-Basen einsetzen. Bevorzugt läuft die Reaktion unter 4-Vinylanilinoder Natriumacetat-Katalyse.

Entsprechend der Fließviskosität des eingesetzten Polyacrylates und der Reaktivität der Komponenten verläuft die reaktive Extrusion bei erhöhten Temperaturen. Die Temperaturen im inline-Prozeß (kontinuierliche Prozeßführung) können zwischen 60 und 180 °C, sehr bevorzugt zwischen 100 und 180 °C betragen.

Für die Verwendung der nach dem erfinderischen Verfahren hergestellten Polyacrylate als Haftklebemassen werden die Polyacrylate zur Optimierung optional mit zumindest einem Harz abgemischt. Als zuzusetzende klebrigmachende Harze sind alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwicklung werden zu der Haftklebemasse ein oder mehrere Weichmacher, wie z.B. niedermolekulare Polyacrylate, Phthalate, Walöweichmacher oder Weichharze hinzudosiert.

Die Acrylathaftklebemasse können des weiteren vorteilhaft mit einem oder mehreren Additiven wie Alterungsschutzmitteln, Lichtschutzmitteln, Ozonschutzmitteln, Fettsäuren, Harzen, Keimbildnern, Blähmitteln, Compoundierungsmitteln und/oder Beschleunigern abgemischt sein.
Weiterhin können sie mit einem oder mehreren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein, wobei auch der Zusatz von blockierungsfreien Isocyanaten möglich ist.

Ferner kann es für das erfinderische Verfahren von Vorteil sein, Verbindungen dem Acrylathotmelt zuzusetzen, die eine nachfolgende Vernetzung erleichtern. Die Polymere können hierzu optional mit Vernetzern abgemischt werden. Als Vernetzer sind z.B. multifunktionelle Acrylate geeignet. Bevorzugte unter Strahlung vernetzende Substanzen gemäß dem erfinderischen Verfahren sind z.B. bi- oder trifunktionelle Acrylate oder bi- oder multifunktionelle Urethanacrylate. Verwendet werden können hier aber auch alle weiteren, dem Fachmann geläufigen bi- oder multifunktionellen Verbindungen, die in der Lage sind, Polyacrylate zu vernetzen. Zur optionalen thermischen Vernetzung können blockierte bioder multifunktionelle Isocyanate Verwendung finden.

Zusätzlich können weitere, nicht copolymerisierte Photoinitiatoren zugesetzt werden. Nützliche Photoinitiatoren, welche sehr gut zu verwenden sind, sind Benzoinether, wie z.B. Benzoinmethylether und Benzoinisopropylether, substituierte Acetophenone, wie z.B. 2,2-Diethoxyacetophenon (erhältlich als Irgacure 651 von Fa. Ciba Geigy), 2,2-Dimethoxy-2-phenyl-1-phenylethanon, Dimethoxyhydroxyacetophenon, substituierte alpha-Ketole, wie z.B. 2-Methoxy-2-hydroxy propiophenon, aromatische Sulfonylchloride, wie z.B. 2-Naphthyl sulfonylchlorid, und photoaktive Oxime, wie z.B. 1-Phenyl-1,2-propandion-2-(Oethoxycarbonyl)oxim.

Eine Weiterentwicklung, die das erfindungsgemäße Verfahren besonders günstig für die Herstellung von beispielsweise Klebebändern macht, zeichnet sich dadurch aus, daß die abgemischte Haftklebemasse aus der Schmelze heraus weiterverarbeitet wird und daß sie insbesondere auf einen Träger aufgetragen wird.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwenden. Diese Aufzählung soll nicht abschließend sein.

Die Vernetzung der erfindungsgemäßen Schmelzhaftklebemassen erfolgt durch kurzzeitige UV-Bestrahlung im Bereich von 200 bis 500 nm mit handelsüblichen Quecksilber-Hochdruckoder -Mitteldrucklampen mit einer Leistung von z.B. 80 bis 240 W/cm. Für die UV-Vernetzung kann es angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.
Die UV-Vernetzung erfolgt in sehr bevorzugter Weise nach der Beschichtung aus der Schmelze auf einen Träger.

Es kann angebracht sein, die erfindungsgemäß beschriebene Acrylathaftklebemasse mit Elektronenstrahlen zusätzlich zu vernetzen. Diese Vernetzungsarten kann auch zusätzlich zur UV-Vernetzung erfolgen. Die thermische Venetzung wird in einem Temperaturbereich von 100 bis 180°C initiiert. Die Elektronenstrahlhärtung erfolgt durch ionisierende Strahlung.

Die Erfindung betrifft weiterhin die Verwendung der so erhaltenen Haftklebemasse für ein Klebeband, wobei die Acrylathaftklebemasse als ein- oder doppelseitiger Film auf einem Träger vorliegt.

Die Erfindung soll im folgenden durch einige Beispiele näher erläutert werden, ohne sich hierdurch unnötig beschränken zu wollen.

### Beispiele

### Testmethoden

### Scherfestigkeit (Test A)

Ein 13 mm breiter Streifen des Klebebandes wurde auf eine glatte und gereinigte Stahloberfläche aufgebracht. Die Auftragsfläche betrug 20 mm × 13 mm (Länge × Breite).
Bei Raumtemperatur wurde ein 1 kg-Gewicht an dem Klebeband befestigt und die Zeit bis zum Abfallen des Gewichtes gemessen.
Die gemessenen Scherstandzeiten sind jeweils in Minuten angegeben und entsprechen dem Mittelwert aus drei Messungen.

### Bestimmung des Gelanteils (Test B)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert als prozentuale Angabe des Gewichtsanteil des Polymers, der nicht in Toluol löslich ist, bestimmt.

### IR-Spektroskopie (Test C)

Zur Messung wurde das FT-IR IFS 45 Spektrometer der Fa. Bruker eingesetzt. Zunächst wurde mit verschiedenen Konzentrationen eine Eichgerade von Acrylsäure und Maleinsäureanhydrid erstellt. Zur Bestimmung des Umsatzes der entsprechenden Anteile Acrylsäure bzw. Maleinsäureanhydrid wurde der prozentuale Abfall der entsprechenden CO-Bande gemessen.

### Gelpermeationschromatographie GPC (Test D)

Die Bestimmung des mittleren Molekulargewichtes M_{w} erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet: Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

### Durchführung

### Durchführung des Hotmeltprozeßes im Meßkneter (Methode 1):

Die Compoundierung der Acrylathaftklebemasse mit den funktionellen Photoinitiatoren und/oder Photosensibilisatoren wurde mit dem Meßkneter Rheomix 610p der Fa. Haake durchgeführt. Als Antriebseinheit stand das Gerät Rheocord RC 300p zur Verfügung. Gesteuert wurde das Gerät mit der Software PolyLab System. Der Kneter wurde jeweils mit 52 g reiner Acrylatschmelzhaftklebemasse (∼80 % Füllgrad) befüllt. Die Versuche wurden bei einer Knettemperatur von 160°C, einer Umdrehungszahl von 40 U/min und einer Knetzeit von 15 Minuten durchgeführt. Anschließend wurden die Muster über einen Labcoater mit zwei beheizbaren Walzen auf ein Trägermaterial mit einem Masseauftrag von 50g/m² aufgetragen.

### UV-Vernetzung (Methode 2):

Zur UV-Bestrahlung mit 254 nm wurde eine UV-Anlage der Fa. Eltosch verwendet. Die Anlage ist ausgerüstet mit einem Hg-UV-Mitteldruckstrahler mit einer Intensität von 120 W/cm. Die Lappenmuster wurden jeweils mit einer Geschwindigkeit von 20 m/min durch die Anlage gefahren, wobei zur Erhöhung der Bestrahlungsdosis die Muster in mehreren Durchgängen bestrahlt wurden. Die dabei protokollierte UV-Dosis ist in J/cm² angegeben.

Zur UV-Bestrahlung mit 320 - 450 nm wurde eine UV-Anlage BK-150 der Fa. Arcure Technologies verwendet. Der Eisendotierte Strahler besitzt eine Intensität von 200 W/cm. Die Lappenmuster wurden jeweils mit einer Geschwindigkeit von 20 m/min durch die Anlage gefahren, wobei zur Erhöhung der Bestrahlungsdosis die Muster in mehreren Durchgängen bestrahlt wurden. Die dabei protokollierte UV-Dosis ist in J/cm² angegeben.

### Funktionelle UV-Photoinitiatoren und UV-Photosensibilisatoren:

Die Verbindung 1a (α-Benzyl-α-(dimethylamino)-4-morpholinobutyrophenon, 1c Benzoin und 1d (1-(Hydroxycyclohexyl)-phenylketon) sind kommerziell von Sigma-Aldrich erhältlich. Die Verbindung 1b (3-[4-(Dimethylamino)phenyl]-1-[4-(2-hydroxyethoxy)phenyl]-2-propen-1-on) wurde im Labor synthetisiert.

### 3-[4-(Dimethylamino)phenyl]-1-[4-(2-hydroxy)thoxy)phenyl]-2-propen-1-on:

Eine Mischung aus 15 g 2-Bromethanol, 16,3 g p-Hydroxyacetophenon und 5,3 g Natriumhydroxid in 100 ml Dimethylformamid (DMF) wurde für 15 Stunden auf 150 °C erhitzt. Anschließend schüttete man die Mischung in Wasser und extrahierte das Produkt mit Dichlormethan aus. Die folgende Vakuumdestillation lieferte 11,4 g eines weißen Feststoffs (4-(2-Hydroxyethoxy)acetophenon).
In einer zweiten Reaktion wurde eine Mischung aus 8,3 g p-Dimethylaminobenzaldehyd, 10,0 g 4-(2-Hydroxyethoxy)acetophenon und 2,5 g Natriumhydroxid in 100 ml Methanol unter Reflux für 10 Stunden erwärmt. Anschließend kühlte man mit einem Eisbad, filterte die Reaktionsmischung und spülte den abgfiterten Feststoff mit kalten Methanol. Dann wurde das Produkt im Vakuumtrockenschrank bei 40 °C und 10 Torr getrocknet. Es konnten 10,2 g weißen Feststoffs isoliert werden.
Der Schmelzpunkt lag bei 128°C (vergl. US 4,565,769, Smp.: 127 - 128.5°C)

### Beispiel 1

Ein für radikalische Polymerisationen konventioneller Reaktor wurde mit 760 g 2-Ethylhexylacrylat, 40 g Acrylsäure und 540 g Aceton/Isopropanol (92/8) befüllt. Nach 45 Minuten Durchleiten von Stickstoffgas und zweimaligem Entgasen wurde der Reaktor unter Rühren auf 58 °C hochgeheizt und daraufhin 0,4 g α,α-Azodiisobutyronitril (AIBN) hinzugegeben. Anschließend wurde das äußere Heizbad auf 70 °C erwärmt und die Reaktion konstant bei dieser Außentemperatur durchgeführt. Nach 1,5 h Reaktionszeit wurden wiederum 0,4 g AIBN hinzugegeben. Nach 3 h und 6 h wurde mit jeweils 250 g Aceton/Isopropanol (92/8) verdünnt. Die Reaktion wurde nach 48 h Reaktionszeit abgebrochen und auf Raumtemperatur abgekühlt. Die Klebemasse wurde im Vakuum/Trockenschrank vom Lösemittel befreit. Anschließend wurde nach Methode 1 vorgegangen und der Schmelzhaftkleber mit 0,5 Gew.-% 1a (α-Benzyl-α-(dimethylamino)-4-morpholinobutyrophenon) im Meßkneter umgesetzt. Der Umsatz der Reaktion lag - bezogen auf den Photoinitiator - bei größer 95 %. Zur UV-Vernetzung wurde nach Methode 2 vorgegangen. Vernetzt wurde mit der Eltosch-Anlage. Nach der UV-Vernetzung wurden letztendlich die Testmethoden A und B durchgeführt.

### Beispiel 2

Es wurde analog zu Beispiel 1 vorgegangen. Der Acrylatschmelzhaftkleber wurde mit 0,5 Gew.-% 1a (α-Benzyl-α-(dimethylamino)-4-morpholino-butyrophenon) und mit 0,5 Gew.-% 1b (3-[4-(Dimethylamino)phenyl]-1-[4-(2-hydroxyethoxy)phenyl]-2-propen-1-on) im Meßkneter umgesetzt. Der Umsatz der Reaktion lag - bezogen auf die eingesetzten Photoinitiator - bei größer 95 %. Zur UV-Vernetzung wurde nach Methode 2 vorgegangen. Vernetzt wurde mit der Arcure-Anlage. Nach der UV-Vernetzung wurden letztendlich die Testmethoden A und B durchgeführt.

### Beispiel 3

Es wurde analog zu Beispiel 1 vorgegangen. Der Acrylatschmelzhaftkleber wurde mit 0,5 Gew.-% 1b (3-[4-(Dimethylamino)phenyl]-1-[4-(2-hydroxyethoxy)phenyl]-2-propen-1-on) und 0,5 Gew.-% 2,2'-bis(o-chlorphenyl)-4,4',5,5'-tetraphenyl-1,1'-bisimidazol (vgl. DuPont, US 4,311,783) im Meßkneter umgesetzt. Der Umsatz der Reaktion lag - bezogen auf die eingesetzten Photoinitiator - bei größer 95 %. Zur UV-Vernetzung wurde nach Methode 2 vorgegangen. Vernetzt wurde mit der Arcure-Anlage. Nach der UV-Vernetzung wurden letztendlich die Testmethoden A und B durchgeführt.

### Beispiel 4

Ein für radikalische Polymerisationen konventioneller Reaktor wurde mit 320 g 2-Ethylhexylacrylat, 320 g n-Butylacrylat, 120 g Methylacrylat, 40 g Maleinsäureanhydrid und 200 g Aceton/Isopropanol (97/3) befüllt. Nach 45 Minuten Durchleiten von Stickstoffgas und zweimaligem Entgasen wurde der Reaktor unter Rühren auf 58 °C hochgeheizt und daraufhin 0,6 g α,α-Azodiisobutyronitril (AIBN) hinzugegeben. Anschließend wurde das äußere Heizbad auf 70 °C erwärmt und die Reaktion konstant bei dieser Außentemperatur durchgeführt. Nach 1,5 h Reaktionszeit wurden wiederum-0,6 g AIBN hinzugegeben. Nach 6 Stunden wurde mit 250 g Aceton/Isopropanol (97/3) verdünnt. Nach 48 h wurden wiederum 0,6 g AIBN hinzugegeben und mit 250 g Aceton/Isopropanol (97/3) verdünnt. Die Reaktion wurde nach 72 h Reaktionszeit abgebrochen und auf Raumtemperatur abgekühlt. Die Klebemasse wurde im Vakuum/Trockenschrank vom Lösemittel befreit. Anschließend wurde nach Methode 1 vorgegangen und der Schmelzhaftkleber mit 0,5 Gew.-% 1b (3-[4-(Dimethylamino)phenyl]-1-[4-(2-hydroxyethoxy)phenyl]-2-propen-1-on) und 0,5 Gew.-% 2,2'bis(o-chlorphenyl)-4,4',5,5'-tetraphenyl-1,1'-bisimidazol (vgl. DuPont, US 4,311,783) im Meßkneter umgesetzt. Der Umsatz der Reaktion lag - bezogen auf die eingesetzten Photoinitiator - bei größer 95 %. Zur UV-Vernetzung wurde nach Methode 2 vorgegangen. Vernetzt wurde mit der Arcure-Anlage. Nach der UV-Vernetzung wurden letztendlich die Testmethoden A und B durchgeführt.

### Beispiele 5

Es wurde analog zu Beispiel 4 vorgegangen. Der Acrylatschmelzhaftkleber wurde mit 0,5 Gew.-% 1c Benzoin und 0,25 Gew.-% Natriumacetat im Meßkneter umgesetzt. Der Umsatz der Reaktion lag - bezogen auf die eingesetzten Photoinitiator - bei ca. 90 %. Zur UV-Vernetzung wurde nach Methode 2 vorgegangen. Vernetzt wurde mit der Eltosch-Anlage. Nach der UV-Vernetzung wurden letztendlich die Testmethoden A und B durchgeführt.

### Beispiel 6

Es wurde analog zu Beispiel 4 vorgegangen. Der Acrylatschmelzhaftkleber wurde mit 0,5 Gew.-% 1d (1-(Hydroxycyclohexyl)-phenylketon) und 0,25 Gew.-% Natriumacetat im Meßkneter umgesetzt. Der Umsatz der Reaktion lag - bezogen auf die eingesetzten Photoinitiator - bei ca. 80 %. Zur UV-Vernetzung wurde nach Methode 2 vorgegangen. Vernetzt wurde mit der Eltosch-Anlage. Nach der UV-Vernetzung wurden letztendlich die Testmethoden A und B durchgeführt.

### Resultate

Die Beispiele 1 bis 6 belegen, daß eine reaktive Extrusion stattgefunden hat. In allen Beispielen wurde ein Umsatz von mindestens 80 % via IR ermittelt. Des weiteren wurden keine Vergelungen beobachtet. Um nun die Eignung dieses Verfahrens zur Herstellung von Acrylatschmelzhaftklebebändern zu untersuchen, wurden weitere Testmethoden durchgeführt. In Tabelle 1 sind die UV-Bestrahlungsbedingungen aufgelistet. Um die Effizienz der UV-Bestrahlung beurteilen zu können, wurde der Gelwert der einzelnen Haftklebemassen gemessen. Der Gelwert korreliert mit dem vernetzten Anteil des Polymers.
Die UV-Dosis wurde durch mehrere Durchgänge durch den Strahlengang der UV-Strahler eingestellt. Die Dosis steigt mit jedem Durchgang linear an. Die Ergebnisse sind in Tabelle 1 zusammengefasst:

| Tabelle 1 | | |
|---|---|---|
| Beispiel | UV-Bestrahlung; Anzahl der Durchgänge | Gelwert [%] |
| 1 | 4 | 50 |
| 2 | 8 | 56 |
| 3 | 8 | 58 |
| 4 | 8 | 47 |
| 5 | 6 | 52 |
| 6 | 6 | 55 |

Tabelle 1 verdeutlicht, daß die Gelwerte von 47 bis 58 % schwanken. Dieser erzielte Bereich liegt im Optimum für Acrylathaftklebemassen, die üblicherweise in einem Bereich von 40 bis 60 % vernetzt werden, um optimale Haftklebeeigenschaften zu erzielen.
Um die klebtechnischen Eigenschaften dieser UV-vernetzbaren Acrylathaftklebemassen beurteilen zu können, wurde die Scherfestigkeit durch Scherstandzeitmessung ermittelt. Die Scherfestigkeit ist ein weiteres wichtiges Kriterium für die Effizienz einer Vernetzung und für die klebtechnische Eigenschaften einer Haftklebemasse. Nur für den Fall, daß eine UV-Vernetzung effizient verläuft, kann man gute Scherfestigkeiten für die erfinderisch hergestellten Acrylatschmelzhaftkleber erwarten. In Tabelle 2 sind daher die gemessenen Scherfestigkeiten nochmal in Verbindung mit der Anzahl der Durchgänge der UV-Bestrahlung für die einzelnen Beispiele aufgelistet.

| Tabelle 2 | | |
|---|---|---|
| Beispiel | UV-Bestrahlung; Anzahl der Durchgänge | SSZ [10 N, RT] [min.] |
| 1 | 4 | 4250 |
| 2 | 8 | 3585 |
| 3 | 8 | 4015 |
| 4 | 8 | 1520 |
| 5 | 6 | 2095 |
| 6 | 6 | 1240 |

| | | |
|---|---|---|
| SSZ: Scherstandzeit | | |

Die Beispiele 1 bis 6 weisen alle eine deutliche Scherfestigkeit bei Raumtemperatur auf; ein weiteres Zeichen für eine erfolgreiche UV-Vernetzung. Die Scherfestigkeit liegt für die Beispiele 1 bis 3 auf einem etwas höheren Niveau. Die Scherfestigkeit wird aber nicht nur durch den Grad der Vernetzung beeinflußt, sondern auch durch die Comonomerzusammensetzung und das mittlere Molekulargewicht.

Zusammenfassend bietet das beschriebene Verfahren eine einfache Möglichkeit zur Herstellung von UV-vernetzbaren Acrylatschmelzhaftklebern, wobei durch die an der Polymerkette gebundenen Photoinitiatoren bzw. Photosensibilisatoren eine höhere Vernetzungseffizienz gegenüber Acrylatschmelzhaftklebern mit freiem Photoinitatior erzielt wird und zum anderen eine Vielzahl von Photoinitiatoren zugänglich sind, die eine funktionelle Gruppe enthalten und somit durch Reaktive Extrusion umgesetzt werden können. Der bisherige Weg der Herstellung von copolymerisierbaren Photoinitiatoren mit anschließender Polymerisation kann somit umgangen werden. Zudem können während der freien radikalischen Polymerisation von Acrylathaftklebemassen und copolymerisierbaren Photoinitiatoren Wechselwirkung auftreten, die zu einer Vergelung der Acrylathaftklebemasse führen. Dies kann mit dem erfinderischen Verfahren umgangen werden.

## Patentansprüche

1. Verfahren zur Herstellung von UV-vernetzbaren Acrylathaftklebemassen, **dadurch gekennzeichnet, daß**
in einem Hotmelt-Prozeß Polyacrylate in Schmelze mit UV-photoaktiven Substanzen in einer polymeranalogen Reaktion umgesetzt werden, wobei die UV-photoaktiven Substanzen derart sind, daß sie Strahlungsenergie aufnehmen und auf ein Reaktionssystem übertragen können.

2. Verfahren nach Anspruch 1, **dadurch gekennzeichnet, daß**
als UV-photoaktive Substanzen Photoinitiatoren eingesetzt werden.

3. Verfahren nach zumindest einem der vorangehenden Ansprüche, **dadurch gekennzeichnet, daß**
als UV-photoaktive Substanzen Photosensibilisatoren eingesetzt werden.

4. Verfahren nach zumindest einem der vorangehenden Ansprüche, **dadurch gekennzeichnet, daß**
UV-photoaktive Substanzen eingesetzt werden, die eine funktionelle Gruppe X tragen, die zu einer chemischen Kopplungsreaktion befähigt ist, wobei insbesondere eine der folgenden Gruppen die funktionellen Gruppe X repräsentiert oder Bestandteil von ihr ist: Hydroxy, Thiol, Isocyanat, Carbonsäureanhydrid, Amin, Amid, Aldehyd, Oxazolin und/oder Epoxy.

5. Verfahren nach einem der vorangegangenen Ansprüche, wobei als UV-photoaktive Substanzen UV-P-Norrish-Typ I - und -Typ II -Initiatoren verwendet werden, insbesondere Benzophenon-, Acetophenon-, Benzil-, Benzoin-, Hydroxyalkylphenon-, Phenylcyclohexylketon-, Anthrachinon-, Thioxanthon-, Triazin- und/oder Fluorenonderivate.

6. Verfahren nach einem der vorangegangenen Ansprüche, wobei als UV-photoaktive Substanzen α-Benzyl-a-(dimethylamino)-4-morpholinobutyrophenon, Benzoin, 1-(Hydroxycyclohexyl)-phenylketon, und/oder 3-[4-(Dimethylamino)phenyl]-1-[4-(2-hydroxyethoxy)phenyl]-2-propen-1-on eingesetzt werden.

7. Verfahren nach einem der vorangegangenen Ansprüche, **dadurch gekennzeichnet, daß** zur Herstellung der Polyacrylate eine Monomermischung enthaltend folgende Komponenten eingesetzt wird:
(a) 45 bis 99,5 Gew.-% Acrylsäure- und/oder Methacrylsäure-Derivate mit der folgenden Formel
CH₂₌C(R₁)(COOR₂) (I)
wobei R₁ = H oder CH₃ ist und R₂ = eine Alkylkette mit 1 bis 20 C-Atomen.
(b) 0,5 bis 25 Gew.-% Vinylverbindungen mit funktionellen Gruppen Y, wobei die funktionellen Gruppen Y derart gewählt sind, daß sie eine chemische Kopplungsreaktion mit der Gruppe X eingehen können.

8. Verfahren nach zumindest einem der vorangehenden Ansprüche, **dadurch gekennzeichnet, daß**
die Monomermischung weiterhin die Komponente
(c) bis zu 30 Gew.-% olefinisch ungesättigte Monomere, insbesondere mit funktionellen- Gruppen,
beinhaltet.

9. Verfahren nach zumindest einem der Ansprüche 7 oder 8, **dadurch gekennzeichnet, daß** als Komponente (b) eine oder mehrere Verbindungen aus der folgenden Gruppe gewählt sind:
Carbonsäureanhydride. Hydroxy-funktionalisiete Monomere, Carbonsäurefunktionalisierte Monomere, Amin-funktionalisierte Monomere, Isocyanat-funktionalisierte Monomere, epoxidierte Monomere.

10. Verfahren nach einem der vorangegangenen Ansprüche, **dadurch gekennzeichnet, daß** der Lösungsmittelgehalt in der Schmelze ≤ 2 Gew,-% ist.

11. Verfahren nach einem der vorangegangenen Ansprüche, **dadurch gekennzeichnet, daß** die polymeranaloge Reaktion zwischen 60 und 180 °C, bevorzugt zwischen 100 und 160 °C, in einem Kneter oder Compounder durchgeführt wird.

12. Verfahren nach einem der vorangehenden Ansprüche, **dadurch gekennzeichnet, daß** vor oder während der polymeranalogen Reaktion Katalysatoren zugegeben werden, insbesondere Lewis-Säuren oder Lewis-Basen.

13. Verfahren nach einem der vorangehenden Ansprüche, **dadurch gekennzeichnet, daß** der Monomermischung oder der Acrylathaftklebernasse Harze oder andere Additive, wie Alterungsschutzmittel, Lichtschutzmittel, Ozonschutzmittel, Fettsäuren, Weichmacher, Keimbildner, Blähmittel, Beschleuniger und/oder Füllmittel zugesetzt werden.

14. Verfahren nach zumindest einem der vorangehenden Ansprüche, **dadurch gekennzeichnet, daß**
die Haftklebemasse aus der Schmelze heraus weiterverarbeitet wird, daß sie insbesondere auf einen Träger aufgetragen wird.

15. Verfahren nach einem der vorangehenden Ansprüche, **dadurch gekennzeichnet, daß** die Haftklebemasse mit UV-Strahlung vernetzt wird, insbesondere nach einer Beschichtung aus der Schmelze auf einen Träger.

16. Verwendung einer nach einem Verfahren nach zumindest einem der vorangehenden Ansprüche hergestellten Acrylathaftklebemassse für ein Klebeband, wobei die Acrylathaftklebmasse ein- oder beidseitig auf einen Träger aufgetragenen ist.

## Claims

1. Process for preparing UV crosslinkable acrylic pressure sensitive adhesives, in that
polyacrylates are reacted in the melt with UV-photoactive substances in a hotmelt process in a polymer-analogous reaction, the UV-photoactive substances being able to absorb radiation energy and transfer it to a reaction system.

2. Process according to Claim 1, **characterized in that**
photoinitiators are used as UV-photoactive substances.

3. Process according to at least one of the preceding claims, **characterized in that**
photosensitizers are used as UV-photoactive substances.

4. Process according to at least one of the preceding claims, **characterized in that**
UV-photoactive substances are used which carry a functional group X capable of a chemical coupling reaction, one of the following groups in particular representing the functional group X or being a constituent thereof:
hydroxyl, thiol, isocyanate, carboxylic anhydride, amine, amide, aldehyde, oxazoline and/or epoxy.

5. Process according to any of the preceding claims, **characterized in that** UV-P Norrish type I and type II initiators being used as UV-photoactive substances, especially benzophenone, acetophenone, benzil, benzoin, hydroxyalkylphenone, phenyl cyclohexyl ketone, anthraquinone, thioxanthone, triazine and/or fluorenone derivatives.

6. Process according to any of the preceding claims, **characterized in that** α-benzyl-a-(dimethylamino)-4-morpholinobutyrophenone, benzoin, 1-hydroxycyclohexyl phenyl ketone, and/or 3-[4-(dimethylamino)phenyl]-1-[4-(2-hydroxyethoxy)phenyl]-2-propen-1-one being used as UV-photoactive substances.

7. Process according to any of the preceding claims, **characterized in that** the polyacrylates are prepared using a monomer mixture comprising the following components:
(a) from 45 to 99.5% by weight of acrylic and/or methacrylic acid derivatives of the formula
CH₂=C(R₁) (color2) (I)
where R₁ is H or CH₃ and R₂ is an alkyl chain having from 1 to 20 carbon atoms,
(b) from 0.5 to 25% by weight of vinyl compounds containing functional groups Y, selected such that they are able to enter into a chemical coupling reaction with the group X.

8. Process according to at least one of the preceding claims, **characterized in that** the monomer mixture further comprises component
(c) up to 30% by weight of olefinically unsaturated monomers, especially monomers containing functional groups.

9. Process according to at least one of Claims 7 and 8, **characterized in that** one or more compounds from the following group are selected as component (b):
carboxylic anhydrides, hydroxy-functionalized monomers, carboxyl-functionalized monomers, amine-functionalized monomers, isocyanate-functionalized monomers, and epoxidized monomers.

10. Process according to any of the preceding claims, **characterized in that**
the solvent content in the melt is ≤ 2% by weight.

11. Process according to any of the preceding claims, **characterized in that** the polymer-analogous reaction is conducted at between 60 and 180°C, preferably between 100 and 160°C, in a kneading device or compounder.

12. Process according to any of the preceding claims, **characterized in that** catalysts, especially Lewis acids or Lewis bases, are added before or during the polymer-analogous reaction.

13. Process according to any of the preceding claims, **characterized in that** resins or other additives, such as aging inhibitors, light stabilizers, ozone protectants, fatty acids, plasticizers, nucleating agents, blowing agents, accelerators and/or fillers are added to the monomer mixture or to the acrylic pressure sensitive adhesive.

14. Process according to at least one of the preceding claims, **characterized in that**
the pressure sensitive adhesive is processed further from the melt and in particular is applied to a backing.

15. Process according to any of the preceding claims, **characterized in that** the pressure sensitive adhesive is crosslinked with UV radiation, in particular following coating from the melt onto a backing.

16. Use of an acrylic pressure sensitive adhesive prepared by a process according to at least one of the preceding claims for adhesive tape, the acrylic pressure sensitive adhesive being applied to one or both sides of a backing.

## Revendications

1. Procédé pour la préparation de matières autoadhésives acrylate réticulables aux UV, **caractérisé en ce que** dans un processus de fusion à chaud hotmelt on fait réagir des polyacrylates dans la masse fondue avec des substances UV-photoactives dans une réaction conduisant à des polymères analogues, les substances UV-photoactives étant de nature telle qu'elles absorbent l'énergie irradiée et peuvent la transférer à un système réactionnel.

2. Procédé selon la revendication 1, **caractérisé en ce qu'**on utilise comme substances UV-photoactives des photoamorceurs.

3. Procédé selon au moins l'une des revendications précédentes, **caractérisé en ce qu'**on utilise comme substances UV-photoactives des photosensibilisateurs.

4. Procédé selon au moins l'une des revendications précédentes, **caractérisé en ce qu'**on utilise des substances UV-photoactives qui portent un groupe fonctionnel X qui est apte à une réaction de couplage chimique, en particulier l'un des groupes suivants représentant le groupe fonctionnel X ou étant un composant de celui-ci : hydroxy, thiol, isocyanate, anhydride d'acide carboxylique, amino, amido, aldéhyde, oxazoline et/ou époxy.

5. Procédé selon l'une quelconque des revendications précédentes, dans lequel on utilise comme substances UV-photoactives des amorceurs UV-P-Norrish de type I et de type II, en particulier des dérivés de benzophénone, d'acétophénone, de benzile, de benzoïne, d'hydroxyalkylphénone, de phénylcyclohexylphénone, d'anthraquinone, de thioxanthone, de triazine et/ou de fluorénone.

6. Procédé selon l'une quelconque des revendications précédentes, dans lequel on utilise en tant que substances UV-photoactives l'α-benzyl-α-(diméthylamino)-4-morpholinobutyrophénone, la benzoïne, la 1-(hydroxycyclohexyl)-phénylcétone et/ou la 3-[4-(diméthylamino)phényl]-1-[4-(2-hydroxyéthoxy)phényl]-2-propén-1-one.

7. Procédé selon l'une quelconque des revendications précédentes, **caractérisé en ce que** pour la préparation des polyacrylates on utilise un mélange de monomères contenant les composants suivants :
(a) 45 à 99,5 % en poids de dérivés d'acide acrylique et/ou d'acide méthacrylique correspondant à la formule suivante
CH₂=C(R₁)(COOR₂) (I)
dans laquelle R₁ = H ou CH₃ et R₂ représente une chaîne alkyle ayant de 1 à 20 atomes de carbone,
(b) 0,5 à 25 % en poids de composés vinyliques à groupes fonctionnels Y, les groupes fonctionnels Y étant choisis de nature telle qu'ils peuvent entrer en une réaction de couplage chimique avec le groupe X.

8. Procédé selon au moins l'une des revendications précédentes, **caractérisé en ce que** le mélange de monomères comprend en outre le composant
(c) jusqu'à 30 % en poids de monomères à insaturation oléfinique, en particulier comportant des groupes fonctionnels.

9. Procédé selon au moins l'une des revendications 7 et 8, **caractérisé en ce qu'**en tant que composant (b) on choisit un ou plusieurs composés dans le groupe suivant :
anhydrides d'acides carboxyliques, monomères fonctionnalisés avec hydroxy, monomères fonctionnalisés avec des acides carboxyliques, monomères fonctionnalisés avec des amines, monomères fonctionnalisés avec des isocyanates, monomères époxydés.

10. Procédé selon l'une quelconque des revendications précédentes, **caractérisé en ce que** la teneur en solvant de la masse fondue est inférieure ou égale à 2 % en poids.

11. Procédé selon l'une quelconque des revendications précédentes, **caractérisé en ce que** la réaction conduisant à des polymères analogues est effectuée dans un mélangeur ou un malaxeur entre 60 et 180 °C, de préférence entre 100 et 160 °C.

12. Procédé selon l'une quelconque des revendications précédentes, **caractérisé en ce qu'**avant ou pendant la réaction conduisant à des polymères analogues on ajoute des catalyseurs, en particulier des acides de Lewis ou des bases de Lewis.

13. Procédé selon l'une quelconque des revendications précédentes, **caractérisé en ce qu'**on ajoute au mélange de monomères ou à la matière autoadhésive acrylate des résines ou d'autres additifs, tels que des agents anti-vieillissement, des photoprotecteurs, des anti-ozonants, des acides gras, des plastifiants, des générateurs de germes, des agents gonflants, des accélérateurs et/ou des charges.

14. Procédé selon au moins l'une des revendications précédentes, **caractérisé en ce que** la matière autoadhésive est transformée à partir de la masse fondue de manière en particulier à être appliquée sur un support.

15. Procédé selon l'une quelconque des revendications précédentes, **caractérisé en ce que** la matière autoadhésive est réticulée par un rayonnement UV, en particulier après une enduction, à partir de la masse fondue, sur un support.

16. Utilisation d'une matière autoadhésive acrylate produite conformément à un procédé selon au moins l'une des revendications précédentes, pour un ruban adhésif, la matière autoadhésive acrylate étant appliquée d'un côté ou des deux sur un support.
